(19) **Europäisches Patentamt / European Patent Office / Office européen des brevets**

(11) **EP 1 628 467 B1**

(12) **EUROPEAN PATENT SPECIFICATION**

(45) Date of publication and mention
of the grant of the patent:
**30.09.2009   Bulletin 2009/40**

(51) Int Cl.:
*H04N 1/60* (2006.01)   *H04N 1/46* (2006.01)
*G06T 1/00* (2006.01)   *B41M 1/14* (2006.01)

(21) Application number: **05090276.6**

(22) Date of filing: **19.07.1999**

(54) **Color proofing method and apparatus, and recorded medium on which color proofing program is recorded**

Farbprobedruckverfahren und -vorrichtung, sowie Speichermedium, auf dem das Farbprobedruckprogramm gespeichert ist

Procédé et appareil de tirage d'épreuves en couleur et support enregistré sur lequel un programme de tirage d'épreuve en couleur est enregistré

(84) Designated Contracting States:
**BE CH DE FI FR GB IT LI NL SE**

(43) Date of publication of application:
**22.02.2006   Bulletin 2006/08**

(62) Document number(s) of the earlier application(s) in accordance with Art. 76 EPC:
**99929904.3 / 1 199 884**

(73) Proprietors:
• **Sagawa printing Co., Ltd.**
**Muko-shi,**
**Kyoto 617-0003 (JP)**
• **Nishida, Nobukatsu**
**Otsu-shi,**
**Shiga 520-0865 (JP)**
• **Uragami, Kazuyuki**
**Sakyo-ku,**
**Kyoto-shi,**
**Kyoto 606-0855 (JP)**
• **Ito, Makoto**
**Urayasu-shi,**
**Chiba 279-0021 (JP)**
• **Fuso Precision Co., Ltd.**
**Kyoto-shi, Kyoto 600-8106 (JP)**

(72) Inventors:
• **Nishida, Nobukatsu**
**Otsu-shi,**
**Shiga 520-0865 (JP)**

• **Uragami, Kazuyuki**
**Kyoto-shi,**
**Kyoto 606-0855 (JP)**
• **Ito, Makoto**
**Urayasu-shi,**
**Chiba 279-0021 (JP)**
• **Takeda, Naoto**
**Kyoto-shi,**
**Kyoto 610-1102 (JP)**

(74) Representative: **Pfenning, Meinig & Partner GbR**
**Patent- und Rechtsanwälte**
**Joachimstaler Strasse 10-12**
**10719 Berlin (DE)**

(56) References cited:
**EP-A- 0 779 736**

• **PATENT ABSTRACTS OF JAPAN vol. 1999, no. 02, 26 February 1999 (1999-02-26) & JP 10 294876 A (RICOH CO LTD), 4 November 1998 (1998-11-04) -& US 6 137 595 A (SAKUYAMA HIROYUKI ET AL) 24 October 2000 (2000-10-24)**
• **PATENT ABSTRACTS OF JAPAN vol. 1995, no. 07, 31 August 1995 (1995-08-31) & JP 07 107312 A (CANON INC), 21 April 1995 (1995-04-21)**

EP 1 628 467 B1

**EP 1 628 467 B1**

**Description**

TECHNICAL FIELD OF THE INVENTION

The present invention relates to a color proofing method and apparatus for improving the color reproducibility of printed matter to be produced by a printing press in proof print produced by a proof press in a printing process.

BACKGROUND ART

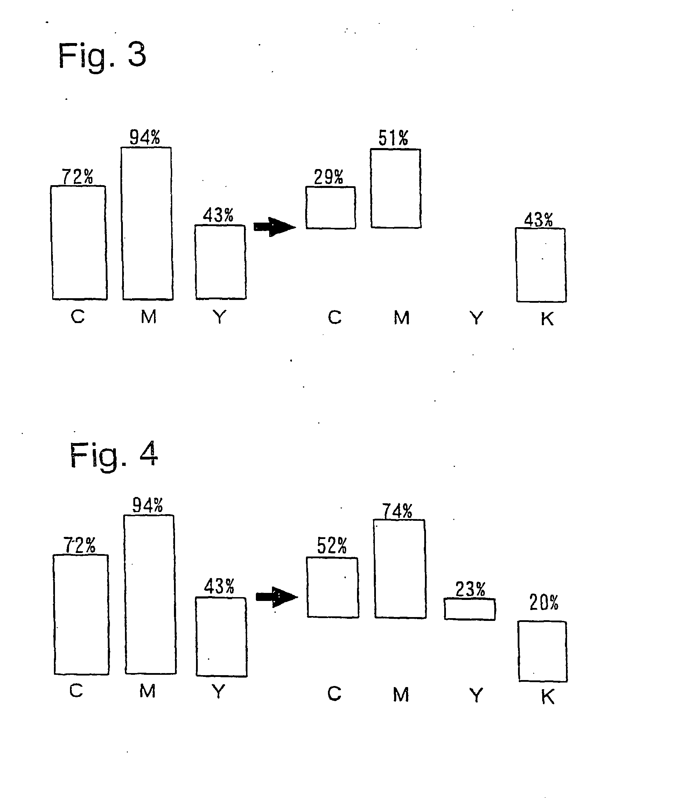

Color correction is conducted prior to printing performed by a printing press.
The color correction is conducted in order to check finish of printing, for example, 1) the presence or absence of a typographical error or gap, 2) the presence or absence of dust, a flaw, a smear or the like, 3) gradation reproducibility such as brightness or darkness of printed matter, 4) the color reproducibility of the printed matter, 5) the sharpness of the printed matter, and the like.
The color correction is generally conducted on the basis of proof printing performed by a proof press. In particular, computerization of pre-printing processing has been progressed in recent years, and therefore, there has been prevailed a digital proof press which can produce proof print directly based on digital data by means of an ink jet system or a sublimation thermal ink-transfer system.
In this case, color matching method is an important technique, in which a color reproducing region of the proof print produced by the proof press is approximated to that of printed matter to be produced by a printing press, thereby producing a visually similar result.
However, in many cases, the respective color reproducing regions inherent to the printed matter and the proof print are different from each other, and thus, it is very difficult to accurately approximate the color reproducing regions to each other.
For example, black (Bk) ink is generally used in addition to three primary colors in a subtractive process, i.e., cyan (C), magenta (M) and yellow (Y) in a printing process. The use of the Bk ink produces an economic effect such as ink saving by expressing an Indian ink character mainly used on a printing paper with monochromatic color ink as well as a quality improvement effect owing to an increase in density region in a high density part or color reproducing region.
There are two methods for making the black Bk from the three colors C, M and Y: a full-black method and a skeleton black method.
Assuming that the colors C, M and Y are uniformly mixed into the black Bk, a value min(CMY), i.e., a minimum value out of values of the colors C, M and Y is replaced with the black Bk, thereby achieving representation with the three colors, This is a method for maximizing a value replaced with the black Bk, and is referred to as the full black method. In an example illustrated in Fig. 3, out of the values of the three colors, i.e., C being 72%, M being 94% and Y being 43%, the minimum value Y is replaced with the black Bk, and further, is subtracted from the values of C and M. In this case, the amount equal to 43% x 2 of ink is saved.
In the full-black method, scum of the black Bk ink occurs at a highlight part, which, therefore, looks dirt. Thus, as illustrated in Fig. 4, the value min(CMY) is not wholly replaced with the black Bk, but partly remains. This method is referred to as the skeleton black method.
The ink colors C, M, Y and Bk are relative to each other. The ink colors C, M, Y and Bk of printed matter produced by a printing press are different from those of proof print produced by a color printing press. Moreover, even the ink colors C, M, Y and Bk of one and the same printed matter slightly look different according to manufacturers. In view of this, the colors cannot be simply compared with each other as they are. Additionally, in comparison of the colors between a monitor and a color printing press, three colors R, G and B are used in the monitor, and therefore, respective color spaces in the monitor and the color printing press are different from each other.
Therefore, there has been conceived a method for, on the presumption of an absolute color space independent of color representing means, replacing color represented objects in the absolute color space so as to compare them with each other. This is referred to as a device independent color.
The absolute color space originally signifies an xyz space which is obtained by numerating a stimulus value with respect to human eyes. Since this space is a markedly distorted space, it is not suitable for perceiving a color difference. Therefore, there has been proposed a space rearranged in a uniformly three-dimensional space (a uniform color space). Currently, an Lab space is mainly used as the uniform color space. Since the uniform color space is the Euclidean space, the color difference is readily obtained.
In actual color management, all of the color of the printed matter by the printing press, and the color of the proof print by the color printing press and the color of the monitor are measured by a spectrophotometer, and then, their color reproducing regions are represented with the Lab values. Here, the colors can be simply compared with each other because of the same color space. Consequently, one of the color reproducing regions is compressed to the other, thereby achieving color matching. This is referred to as Gamut Mapping.

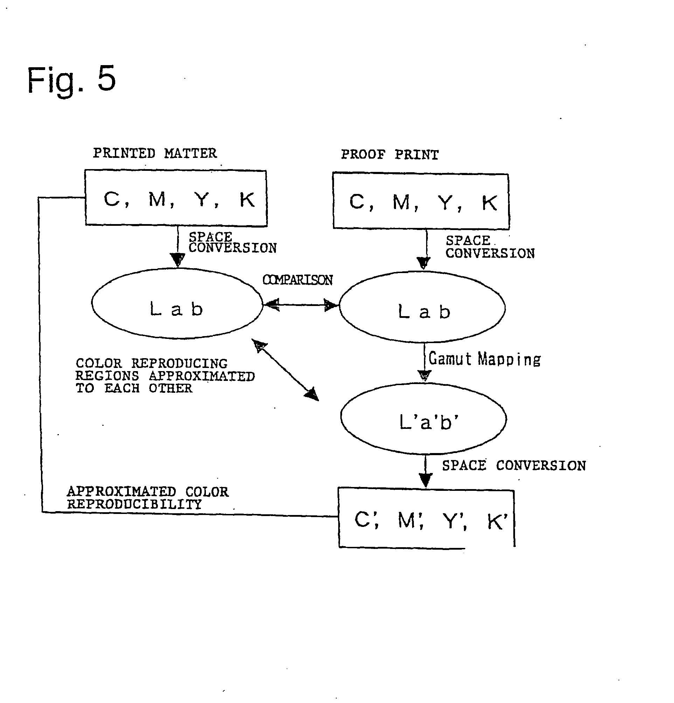

Here, since the color space after the color matching is the Lab space, the Lab space is converted again into respective relative color spaces, thereby obtaining actual conversion values. Fig. 5 illustrates an example in which the above-described procedures are applied to the color matching between the printed matter and the proof print.

In this manner, the device independent color is a remarkably effective color management technique. However, there arises a serious problem in view of representation of the black color. That is, since the black is a color which is artificially created, the original value of the black Bk is lost when the colors C, M, Y and Bk are converted to the colors in the Lab space, which are further converted again to the colors C, M, Y and Bk. Namely, in this case, there exists no reversibility between the colors C, M, Y and Bk before and after the conversion.

The most adverse effect on the actual processing is that a part having an area factor of 100% of the black mainly used in the representation of an Indian ink character or the like (C = M = Y = 0, Bk = 100) is lost, resulting in three or four colors (for example, C = 71, M = 75, Y = 85 and Bk = 35). In other words, the Indian ink character cannot be sharply represented, and further, the ink need be used in a greater quantity.

Moreover, in the printing process, in the case where color proof of offset lithography or gravure printing is performed by the use of a color printing press, a paper which can be used in the color printing press for performing the proofing is different from a paper which can be used in a printing press for performing main printing (hereinafter referred to as "a printing paper") in most cases. In particular, special papers need be used in an ink jet printing press, a sublimation thermal ink-transfer type printing press or the like, and therefore, the same paper as the printing paper cannot be used in fact.

If printing papers are different, it is more difficult to approximate the proof print to the printed matter.

In view of this, there has been conventionally a method for reproducing the color of the printing paper on image data so as to visually approximate the proof print to the printing paper. In this method, it is possible to reproduce the printing paper in proofing with relative case unless a paper special to the color printing press has so extreme a color as to prevent reproducibility of the color of the printing paper, thereby obtaining the proof print which can be more approximated to the printed matter.

However in this method, there arises a problem not in a region on the proof print, to which no ink is transferred, i.e., a blank region, but in a region to which the ink is transferred, as follows: if the color of the paper is added to only the blank region to which no ink is transferred, the color of the paper is not added to the region to which the ink is transferred, and therefore, the original color remains as it is.

Since printing gradation representation is principally area gradation, the color of the ink and the color of the paper basically looks mixed in a visual way. In other words, the color of the paper visually has an effect on the color of the ink, This effect is particularly shown more at a highlight part having a low ink area factor, so that the effect of the color of the paper visually becomes greater.

Another method for approximating the proof print to the printed matter in the case where the printing papers are different is a method for uniformly adding the color of the paper to the entire printing image. This method is further classified into a method for adding the color of the printing paper to image data and a method for printing a printing image after previous printing of the color of the printing paper over the entire special paper. In the above-described methods, the color matching between the proof print and the printed matter becomes excellent at the highlight part with relative accuracy, but the exposure area of the color of the paper is small from an intermediate part to a shadow part, and the color of the paper largely has an effect even on a region which hardly gets an effect by the color of the paper, whereby a color reproducing region of the proof print is markedly deviated from a color reproducing region of the printed matter.

JP 10 2948 76 discloses a color matching method for exactly outputting an image displayed on a color monitor to a color printer. In accordance with this method, for each of different types of image parts (bitmap image, character, graphic image) of the image displayed on the color monitor, it is judged whether the color(s) constituting the image part is(are) matched with the predetermined specific color(s) or not. When the color(s) constituting the image part is (are) not matched with the specific color(s), a predetermined color matching process is performed for the image part, on the other hand, when the color(s) constituting the image part is(are) matched with the specific colors, another color matching process is performed for the image part.

JP 07 107 312 discloses a color matching method for matching RGB data with CMYK data. In this method, RGB data are firstly converted into CMY data and from the obtained CMY data K data is generated. In this case, it is not considered how much a black component is included in the original color, because the data conversion starts from RGB data.

The object to be solved by the present invention is to reproduce the color of the printing paper by means of the printing press, so as to reproduce the representing characteristics of the black ink on the printed matter.

DISCLOSURE OF THE INVENTION

This object according to the invention is solved by a method comprising the features of claim 1, an apparatus comprising the features of claim 2, and a recording medium comprising the features of claim 3, respectively.

In order to solve the above-described problem, according to a first aspect of the present invention, there is provided a color proofing method for improving the color reproducibility of printed matter to be produced by a printing press in proof print produced by a proof press, the color proofing method comprising the step of: correcting proof printing image data, in which each of levels of monochromatic color gradation of black on the printed matter is represented on the proof print, out of the proof printing image data over the entire color space in a subtractive process resulting from color matching between proof print produced by the proof press and the printed matter to be produced by the printing press in such a manner that a part having, a black ink area factor of 100% on the printed matter is represented only with black ink also on the proof print, but that a part other than the part having a black ink area factor of 100% on the printed matter is represented on the proof print by using under color removal, to thus reproduce, on the proof print, the representing characteristics of the black ink on the printed matter, wherein the step of correcting the proof printing image data includes the steps of: finding $\min(C_{100}, M_{100}, Y_{100})$ from color values $(C_{100}, M_{100}, Y_{100}, Bk_{100})$ of the proof printing image data for representing, on the proof print, the part having the black ink area factor of 100% on the printed matter, to thus determine a new value P of $Bk_{100}$;. finding an addition value $\alpha_{100}$ for $Bk_{100}$ in accordance with the following equation:

$$\alpha_{100} = \min(C_{100}, M_{100}, Y_{100}) \times (P - Bk_{100}) / \min(C_{100}, M_{100}, Y_{100}),$$

wherein $1 \le P \le 100$;
adding the addition value $\alpha_{100}$ to $Bk_{100}$ as well as setting all of $C_{100}$, $M_{100}$ and $Y_{100}$ to 0; and repeating, with respect to n from 99 to 1, the following steps of: determining $\min(C_n, M_n, Y_n)$ from color values $(C_n, M_n, Y_n, Bk_n)$ of the proof printing image data for representing, on the proof print, a part having a black ink area factor of n% on the printed matter; determining an addition value $\alpha_n$ with respect to $Bk_n$, in accordance with the following equation:
$\alpha_n = (\min(C_n, M_n, Y_n) - (100 - n)) \times (P - Bk_{100}) / \min(C_{100}, M_{100}, Y_{100})$, wherein $1 \le P \le 100$, to thus add the addition value $\alpha_n$ to $Bk_n$; and obtaining respective reduction values $\beta_n$, $\gamma_n$ and $\delta_n$ of $C_n$, $M_n$ and $Y_n$ in accordance with the following equations:

$$\beta_n = \alpha_n \times ((P - Bk_{100}) / C_{100}),$$

$$\gamma_n = \alpha_n \times ((P - Bk_{100}) / M_{100}),$$

and

$$\delta_n = \alpha_n \times ((P - Bk_{100}) / Y_{100}),$$

wherein $1 \le P \le 100$, to thus subtract the reduction values $\beta_n$, $\gamma_n$ and $\delta_n$ from $C_n$, $M_n$ and $Y_n$, respectively.

Furthermore, in order to solve the above-described problem, according to a second aspect of the present invention, there is provided a color proofing apparatus for improving the color reproducibility of printed matter to be produced by a printing press in proof print produced by a proof press by the use of a computer, the color proofing apparatus comprising: an image data input section for receiving an input of proof printing image data over the entire color space in a subtractive process resulting from color matching between proof print produced by the proof press and the printed matter produced by the printing press; and an image data correcting section for correcting the proof printing image data, in which each of levels of monochromatic color gradation of black on the printed matter is represented on the proof print, out of the image data inputted to the, image data input section in such a manner that a part having a black ink area factor of 100% on the printed matter is represented only with black ink also on the proof print, but that a part other than the part having a black ink area factor of 100% on the printed matter is represented on the proof print by using under color removal, to thus output the corrected image data, wherein the image data correcting section includes: a 100% black part image data correcting section for determining $\min(C_{100}, M_{100}, Y_{100})$ from color values $(C_{100}, M_{100}, Y_{100}, Bk_{100})$ of the proof printing image data for representing, on the proof print, the part having the black ink area factor of 100% on the printed matter, to thus determine a new value P of $Bk_{100}$, determining an addition value $\alpha_{100}$ for $Bk_{100}$ in accordance with the following equation:

$$\alpha_{100} = \min(C_{100}, \ M_{100}, \ Y_{100}) \times (P - Bk_{100}) / \min(C_{100}, \ M_{100}, \ Y_{100}),$$

wherein $1 \leq P \geqq 100$, and then, adding the addition value $\alpha_{100}$ to $Bk_{100}$ as well as setting all of $C_{100}$, $M_{100}$ and $Y_{100}$ to 0; and a 99% or less black par t image data correcting section for repeating, with respect to n from 99 to 1, the following processes of: determining $\min(C_n, M_n, Y_n)$ from color values $(C_n, M_n, Y_n, Bk_n$ of the proof printing image data for representing on the proof print, a part having a black ink area factor of n% on the printed matter; determining an addition value $\alpha_n$ for $Bk_n$, in accordance with the following equation:

$$\alpha_n = (\min(C_n, M_n, Y_n) - (100 - n)) \times (P - Bk_{100}) / \min(C_{100}, M_{100}, Y_{100}),$$

wherein $1 \leq P \leq 100$, to thus add the addition value $\alpha_n$ to $Bk_n$ ;
and determining respective reduction values and $\beta_n$, $\gamma_n$ and $\delta_n$ of $C_n$, $M_n$, and $Y_n$, in accordance with the following equations:

$$\beta_n = \alpha_n \times ((P - Bk_{100}) / C_{100}),$$

$$\gamma_n = \alpha_n \times ((P - Bk_{100}) / M_{100}),$$

and

$$\delta_n = \alpha_n \times ((P - Bk_{100}) / Y_{100}),$$

wherein $1 \leq P \leq 100$, to thus subtract the reduction values $\beta_n$, $\gamma_n$ and $\delta_n$ from $C_n$, $M_n$, and $Y_n$, respectively.

Furthermore, in order to solve the above-described problem according to a third aspect of the present invention, there is provided a recording medium recording therein the color proofing program for improving the color reproducibility of printed matter to be produced by a printing press in proof print produced by a proof press by the use of a computer, the color proofing pro gram further instructing the computer to execute the process of: correcting proof printing image data, in which each of levels of monochromatic color gradation of black oil the printed matter is represented oil the proof print, out of the proof printing image data over the entire color space in a subtractive process resulting from color matching between proof print by the proof press and the printed matter by means of the printing press in such a manner that a part having a black ink area factor of 100% on the printed matter is represented only with black ink also on the proof print, but that a part other than the part having a black ink area factor of 100% on the printed matter is represented on the proof print by using under color removal, to thus reproduce, on the proof print, the representing characteristics of the black ink on the printed matter, wherein the proof printing image data correcting process includes the processes of: determining $\min(C_{100}, M_{100}, Y_{100})$ from color values $(C_{100}, M_{100}, Y_{100}, Bk_{100})$ of the proof printing image data for re resenting, on the proof print, the part having the P black ink area factor of 100% on the printed matter, to thus determine a new value P of $Bk_{100}$; determining an addition value $\alpha_{100}$ for $Bk_{100}$ in accordance with the following equation:

$$\alpha_{100} = \min(C_{100}, \ M_{100}, \ Y_{100}) \times (P - Bk_{100}) / \min(C_{100}, \ M_{100}, \ Y_{100}),$$

wherein;
adding the addition value $\alpha_{100}$ to $Bk_{100}$ as well as setting all of $C_{100}$, $M_{100}$, and $Y_{100}$ to 0; and repeating, with respect to n from 99 to 1, the following processes of determining $\min(C_n, M_n, Y_n)$ from color values $(C_n, M_n, Y_n, Bk_n)$ of the proof printing image data for representing, on the proof print, a part having a black ink area factor of n% on the printed matter; determining an addition value $\alpha_n$ for $Bk_n$ in accordance with the following equation:

$$\alpha_n = (\min(C_n, M_n, Y_n) - (100 - n)) \times (P - Bk_{100}) / \min(C_{100}, M_{100}, Y_{100}),$$

wherein $1 \leq P \leq 100$ to thus add the addition value $\alpha_n$ to $Bk_n$;

and determining respective reduction values $\beta_n$, $\gamma_n$ and $\delta_n$ of $C_n$, $M_n$ and $Y_n$ in accordance with the following equations:

$$\beta_n = \alpha_n \times ((P - Bk_{100}) / C_{100}),$$

$$\gamma_n = \alpha_n \times ((P - Bk_{100}) / M_{100}),$$

and

$$\delta_n = \alpha_n \times ((P - Bk_{100}) / Y_{100}),$$

wherein $1 \leq P \leq 100$, to thus subtract the reduction values $\beta_n$, $\gamma_n$ and $\delta_n$ from $C_n$, $M_n$ and $Y_n$, respectively.

BRIEF DESCRIPTION OF THE DRAWINGS

Fig.1 is a flowchart illustrating the schematic configuration of a color proofing method according to a preferred embodiment in the present invention;

Fig. 2 is a block diagram illustrating the schematic configuration of a color proofing apparatus according to a preferred embodiment in the present invention;

Fig. 3 is a diagram illustrating a full black method;

Fig. 4 is a diagram illustrating a skeleton black method; and

Fig. 5 is a diagram illustrating a conventional method for performing color matching between printed matter and proof print.

BEST MODE CARRYING OUT THE INVENTION

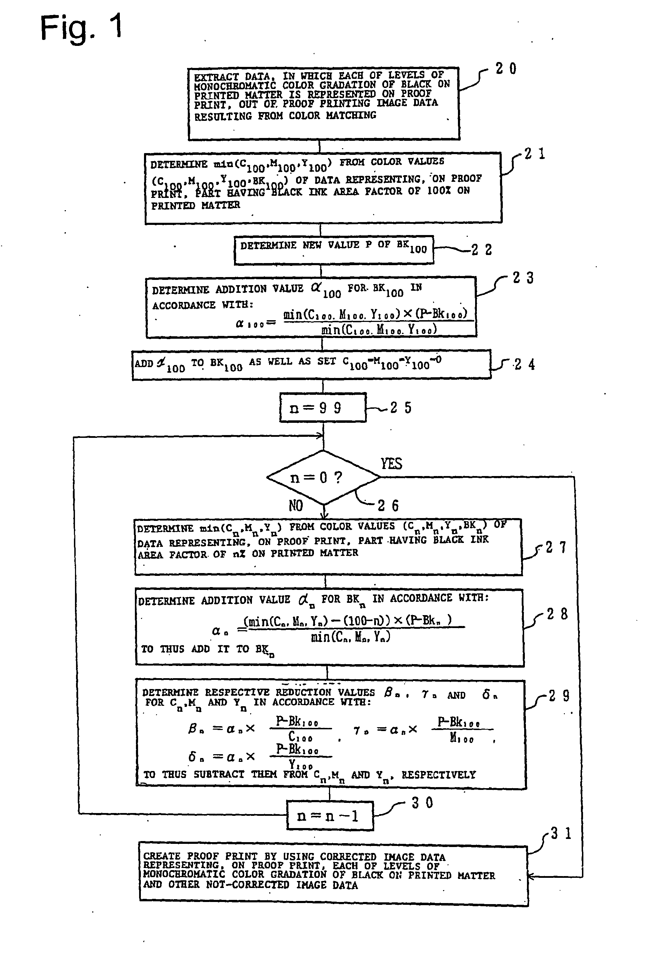

Fig. 1 is a flowchart illustrating the schematic configuration of a color proofing method according to another preferred embodiment in the present invention. Referring to Fig. 1, first, proof printing image data, in which each of levels of monochromatic color gradation of black on printed matter is represented on proof print, is extracted out of the proof printing image data over the entire color space in a subtractive process resulting from color matching between the proof print by the proof press and the printed matter by means of the printing press (see Step (20) in Fig. 1).

And then, $\min(C_{100}, M_{100}, Y_{100})$ is obtained from color values $(C_{100}, M_{100}, Y_{100}, Bk_{100})$ of the proof printing image data for representing, on the proof print, the part having the black ink area factor of 100% on the printed matter (see Step (21) in Fig. 1 and then, a new value P of $Bk_{100}$ is determined (see Step (22) in Fig. 1). Thereafter, an addition value $\alpha_{100}$ for $Bk_{100}$ is obtained in accordance with the following equation:

$$\alpha_{100} = \min(C_{100}, M_{100}, Y_{100}) \times (P - Bk_{100}) / \min(C_{100}, M_{100}, Y_{100}),$$

wherein $1 \leq P \leq 100$ (see Step (23) in Fig 1). Subsequently, the addition value $\alpha_{100}$ is added to $Bk_{100}$, and further, all of $C_{100}$, $M_{100}$ and $Y_{100}$ are set to 0 (see Step (24) in Fig. 1).

Furthermore, with respect to n from 99 to 1, processes (a) to (c) described below are repeated (see Steps (25) to (30) in Fig. 1).

(a) $\min(C_n, M_n, Y_n)$ is obtained from color values $(C_n, M_n, Y_n, Bk_n)$ of the proof printing image data for representing, on the proof print, a part having a black ink area factor of n% on the printed matter (see Step (27) in Fig. 1);

(b) an addition value $\alpha_n$ for $Bk_n$ is determined in accordance with the following equation: $\alpha_n = (\min(C_n, M_n, Y_n) - (100-n)) \times (P-Bk_{100})/\min(C_{100}, M_{100}, Y_{100})$, wherein $1 \leq P \leq 100$, to thus add the addition value $\alpha_n$ to $Bk_n$ (see Step (28) in Fig. 1); and

(c) respective reduction values $\beta_n$, $\gamma_n$ and $\delta_n$ of $C_n$, $M_n$ and $Y_n$ are determined in accordance with the following equations:

$$\beta_n = \alpha_n \times ((P-Bk_{100})/C_{100}),$$

$$\gamma_n = \alpha_n \times ((P-Bk_{100})/M_{100}),$$

and

$$\delta_n = \alpha_n \times ((P-Bk_{100})/Y_{100}),$$

wherein $1 \leq P \leq 100$, to thus subtract the reduction values $\beta_n$, $\gamma_n$ and $\delta_n$ from $C_n$, $M_n$ and $Y_n$, respectively (see Step (29) in Fig. 1).

The proofing is performed by the color printing press based on the proof printing image data which is corrected in the above-described manner and in which each of levels of monochromatic color gradation of black on the printed matter is represented on the proof print and the other not-corrected proof printing image data (see Step (31) in Fig. 1).

On the obtained proof print is reproduced a part having an area factor of 100% of the black ink used much in representing an Indian ink character or the like on the printed matter. In this manner, the representing characteristics of the black ink on the printed matter can be reproduced with accuracy. Moreover, the black ink is used as much as possible on the proof print, so that the use amount of ink C, M or Y can be reduced, thereby saving the cost of the proofing.

If a color proofing program for instructing a computer to execute the color proofing method according to the present invention is recorded in a recording medium such as a flexible disk or a CD-ROM, the computer reads the recording medium, thereby readily carrying out the color proofing method according to the present invention.

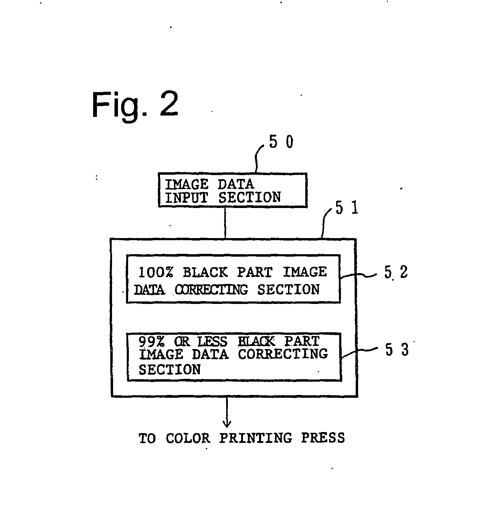

Fig. 2 is a block diagram illustrating the schematic configuration of a color proofing apparatus according to another preferred embodiment of the present invention. The color proofing apparatus according to the present invention is adapted to improve the color reproducibility of a printing paper in proofing by means of a proof press by the use of a computer. As illustrated in Fig. 2, the color proofing apparatus according to the present invention comprises an image data input section 50 for receiving an input of proof printing image data over the entire color space in a subtractive process resulting from color matching between proof print produced by the proof press and the printed matter to be produced by the printing press; and an image data correcting section 51 for correcting the proof printing image data, in which each of levels of monochromatic color gradation of black on the printed matter is represented on the proof print, out of the image data inputted to the image data input section 50 in such a manner that a part having a black ink area factor of 100% on the printed matter is represented only with black ink also on the proof print, but that a part other than the part having a black ink area factor of 100% on the printed matter is represented on the proof print by using, under color removal, to thus output the corrected image data.

The image data correcting section 51 includes a 100% black part image data correcting section 52 for determining $\min(C_{100}, M_{100}, Y_{100})$ from color values $(C_{100}, M_{100}, Y_{100}, Bk_{100})$ of the proof printing image data for representing, on the proof print, the part having the black ink area factor of 100 % on the printed matter, to thus determine a new value P of $Bk_{100}$, determining an addition value $\alpha_{100}$ for $Bk_{100}$ in accordance with the following equation:

$$\alpha_{100} = \min(C_{100}, M_{100}, Y_{100}) \times (P-Bk_{100})/\min(C_{100}, M_{100}, Y_{100}),$$

wherein $1 \leq P \leq 100$, and then, adding the addition value $\alpha_{100}$ to $Bk_{100}$ as well as setting all of $C_{100}$, $M_{100}$ and $Y_{100}$ to 0; and a 99% or less black part image data correcting section 53 for repeating, with respect to n from 99 to 1, the following processes of determining $\min(C_n, M_n, Y_n)$ from color values $(C_n, M_n, Y_n, Bk_n)$ of the proof printing image data for representing, on the proof print, a part having a black ink area factor of n% on the printed matter; determining an addition value $\alpha_n$ for $Bk_n$ in accordance with the following equation:

$$\alpha_n = (\min(C_n, M_n, Y_n) - (100-n)) \times (P - Bk_{100}) / \min(C_{100}, M_{100}, Y_{100}),$$

wherein $1 \leq P \leq 100$, to thus add the addition value $\alpha_n$ to $Bk_n$; and determining respective reduction values $\beta_n$, $\gamma_n$ and $\delta_n$ for $C_n$, $M_n$ and $Y_n$ in accordance with the following equations:

$$\beta_n = \alpha_n \times ((P - Bk_{100}) / C_{100}),$$

$$\gamma_n = \alpha_n \times ((P - Bk_{100}) / M_{100}),$$

and

$$\delta_n = \alpha_n \times ((P - Bk_{100}) / Y_{100}),$$

wherein $1 \leq P \leq 100$, to thus subtract the reduction values $\beta_n$, $\gamma_n$ and $\delta_n$ from $C_n$, $M_n$ and $Y_n$, respectively.

INDUSTRIAL UTILIZABILITY

As described above, according to the present invention, it is possible to readily achieve the color reproducibility of the high accuracy between the printed matter and the proof print in the color proofing. In particular, according to the present invention, it is possible to reproduce the representing characteristics of the black ink on the printed matter with the high accuracy in the proofing. Thus, the present invention can remarkably contribute to the efficiency of the proofing work.

Claims

1.   A color proofing method for improving the color reproducibility of printed matter to be produced by a printing press in proof print produced by a proof press, the color proofing method comprising the step of:

correcting proof printing image data, in which each of levels of monochromatic color gradation of black on the printed matter is represented on the proof print, out of the proof printing image data over the entire color space in a subtractive process resulting from color matching between proof print produced by the proof press and the printed matter to be produced by the printing press in such a manner that a part having a black ink area factor of 100% on the printed matter is represented only with black ink also on the proof print, but that a part other than the part having a black ink area factor of 100% on the printed matter is represented on the proof print by using under color removal, to thus reproduce, on the proof print, the representing characteristics of the black ink on the printed matter,

**characterized in that**
the step of correcting the proof printing image data includes the steps of:

finding $\min(C_{100}, M_{100}, Y_{100})$ from color values $(C_{100}, M_{100}, Y_{100}, Bk_{100})$ of the proof printing image data for representing, on the proof print, the part having the black ink area factor of 100% on the printed matter, to thus determine a new value P of $Bk_{100}$;
finding an addition value $\alpha_{100}$ for $Bk_{100}$ in accordance with the following equation:

$$\alpha_{100} = \min(C_{100}, M_{100}, Y_{100}) \times (P - Bk100) / \min(C_{100}, M_{100}, Y_{100}),$$

wherein $1 \leq P \leq 100$;
adding the addition value ($\alpha_{100}$, to $Bk_{100}$ as well as setting all of $C_{100}$, $M_{100}$ and $Y_{100}$ to 0; and

repeating, with respect to n from 99 to 1, the following steps of:

determining min $(C_n, M_n, Y_n)$ from color values $(C_n, M_n, Y_n, Bk_n)$ of the proof printing image data for representing, on the proof print, a part having a black ink area factor of n% on the printed matter;
determining an addition value $\alpha_n$ with respect to $Bk_n$ in accordance with the following equation:

$$\alpha_n = (\min(C_n, M_n, Y_n) - (100-n)) \times (P - Bk_{100}) / \min(C_{100}, M_{100}, Y_{100}),$$

wherein $1 \leq P \leq 100$, to thus add the addition value $\alpha_n$ to $Bk_n$; and
obtaining respective reduction values $\beta_n$, $\gamma_n$ and $\delta_n$ of $C_n$, $M_n$, and $Y_n$ in accordance with the following equations:

$$\beta_n = \alpha_n \times ((P - Bk_{100}) / C_{100}),$$

$$\gamma_n = \alpha_n \times ((P - Bk_{100}) / M_{100}),$$

and

$$\delta_n = \alpha_n \times ((P - Bk_{100}) / Y_{100}),$$

wherein $1 \leq P \leq 100$, to thus subtract the reduction values $\beta_n$, $\gamma_n$ and $\delta_n$ from $C_n$, $M_n$ and $Y_n$, respectively.

2. A color proofing apparatus for improving the color reproducibility of printed matter to be produced by a printing press in proof print produced by a proof press by the use of a computer, the color proofing apparatus comprising:

an image data input section for receiving an input of proof printing image data over the entire color space in a subtractive process resulting from color matching between proof print produced by the proof press and the printed matter produced by the printing press; and
an image data correcting section for correcting the proof printing image data, in which each of levels of monochromatic color gradation of black on the printed matter is represented on the proof print, out of the image data inputted to the image data input section in such a manner that a part having a black ink area factor of 100% on the printed matter is represented only with black ink also on the proof print, but that a part other than the part having a black ink area factor of 100% on the printed matter is represented on the proof print by using under color removal, to thus output the corrected image data,
**characterized in that**
the image data correcting section includes:

a 100% black part image data correcting section for determining $\min(C_{100}, M_{100}, Y_{100})$ from color values $(C_{100}, M_{100}, Y_{100}, Bk_{100})$ of the proof printing image data for representing, on the proof print, the part having the black ink area factor of 100% on the printed matter, to thus determine a new value P of $Bk_{100}$, determining an addition value $\alpha_{100}$ for $Bk_{100}$ in accordance with the following equation:

$$\alpha_{100} = \min(C_{100}, M_{100}, Y_{100}) \times (P - Bk_{100}) / \min(C_{100}, M_{100}, Y_{100}),$$

wherein $1 \leq P \leq 100$, and then, adding the addition value $\alpha_{100}$ to $Bk_{100}$ as well as setting all of $C_{100}$, $M_{100}$ and $Y_{100}$ to 0; and
a 99% or less black part image data correcting section for repeating, with respect to n from 99 to 1, the following processes of:

determining $\min(C_n, M_n, Y_n)$ from color values $(C_n, M_n, Y_n, Bk_n)$ of the proof printing image data for representing, on the proof print, a part having a black ink area factor of n% on the printed matter; determining an addition value $\alpha_n$ for $Bk_n$ in accordance with the following equation:

$$\alpha_n = (\min(C_n, M_n, Y_n) - (100-n)) \times (P-Bk_{100}) / \min(C_{100}, M_{100}, Y_{100}),$$

wherein $1 \leq P \leq 100$, to thus add the addition value $\alpha_n$ to $Bk_n$; and
determining respective reduction values $\beta_n$, $\gamma_n$ and $\delta_n$ of $C_n$, $M_n$ and $Y_n$ in accordance with the following equations:

$$\beta_n = \alpha_n \times ((P-Bk_{100}) / C_{100}),$$

$$\gamma_n = \alpha_n \times ((P-Bk_{100}) / M_{100}),$$

and

$$\delta_n = \alpha_n \times ((P-Bk_{100}) / Y_{100}),$$

wherein $1 \leq P \leq 100$, to thus subtract the reduction values $\beta_n$, $\gamma_n$ and $\delta_n$ from $C_n$, $M_n$ and $Y_n$, respectively.

3. A recording medium recording therein the color proofing program for improving the color reproducibility of printed matter to be produced by a printing press in proof print produced by a proof press by the use of a computer, the color proofing program further instructing the computer to execute the process of:

   correcting proof printing image data, in which each: of levels of monochromatic color gradation of black on the printed matter is represented on the proof print, out of the proof printing image data over the entire color space in a subtractive process resulting from color matching between proof print by the proof press and the printed matter by means of the printing press in such a manner that a part having a black ink area factor of 100% on the printed matter is represented only with black ink also on the proof print, but that a part other than the part having a black ink area factor of 100% on the printed matter is represented on the proof print by using under color removal, to thus reproduce, on the proof print, the representing characteristics of the black ink on the printed matter,

   **characterized in that**
   the proof printing image data correcting process includes the processes of:

   determining $\min(C_{100}, M_{100}, Y_{100})$ from color values $(C_{100}, M_{100}, Y_{100}, Bk_{100})$ of the proof printing image data for representing, on the proof print, the part having the black ink area factor of 100% on the printed matter, to thus determine a new value P of $Bk_{100}$;
   determining an addition value $\alpha_{100}$ for $Bk_{100}$ in accordance with the following equation:

   $$\alpha_{100} = \min(C_{100}, M_{100}, Y_{100}) \times (P-Bk_{100}) / \min(C_{100}, M_{100}, Y_{100}),$$

   wherein $1 \leq P \leq 100$;
   adding the addition value $\alpha_{100}$, to $Bk_{100}$ as well as setting all of $C_{100}$, $M_{100}$ and $Y_{100}$ to 0; and
   repeating, with respect to n from 99 to 1, the following processes of:

   determining $\min(C_n, M_n, Y_n)$ from color values $(C_n, M_n, Y_n, Bk_n)$ of the proof printing image data for representing, on the proof print, a part having a black ink area factor of n% on the printed matter;
   determining an addition value $\alpha_n$ for $Bk_n$ in accordance with the following equation:

$$\alpha_n = (\min(C_n, M_n, Y_n) - (100-n)) \times (P-Bk_{100}) / \min(C_{100}, M_{100}, Y_{100}),$$

wherein $1 \leq P \leq 100$, to thus add the addition value $\alpha_n$ to $Bk_n$; and
determining respective reduction values $\beta_n$, $\gamma_n$ and $\delta_n$ for $C_n$, $M_n$ and $Y_n$ in accordance with the following equations:

$$\beta_n = \alpha_n \times ((P-Bk_{100}) / C_{100}),$$

$$\gamma_n = \alpha_n \times ((P-Bk_{100}) / M_{100}),$$

and

$$\delta_n = \alpha_n \times ((P-Bk_{100}) / Y_{100}),$$

wherein $1 \leq P \leq 100$, to thus subtract the reduction values $\beta_n$, $\gamma_n$ and $\delta_n$ from $C_n$, $M_n$ and $Y_n$, respectively.

## Patentansprüche

1. Farbprobedruckverfahren zum Verbessern der Farbreproduzierbarkeit von gedruckter Materie, die von einer Druckpresse zu erzeugen ist, in einem von einer Probedruckpresse erzeugten Probedruck, welches Farbprobedruckverfahren den Schritt aufweist:

   Korrigieren von Probedruck-Bilddaten, in denen jeder von Pegeln von monochromatischer Farbgradation von schwarz auf der gedruckten Materie auf dem Probedruck dargestellt ist, aus den Probedruck-Bilddaten über den gesamten Farbraum in einem subtraktiven Prozess, der sich aus der Farbanpassung zwischen dem von der Probedruckpresse erzeugten Probedruck und dem von der Druckpresse zu erzeugenden gedruckten Material in einer solchen Weise ergibt, dass ein Teil mit einem Flächenfaktor für schwarze Druckfarbe von 100% auf dem gedruckten Material nur durch schwarze Druckfarbe auch auf dem Probedruck dargestellt wird, aber dass ein anderer Teil als der Teil mit einem Flächenfaktor für schwarze Druckfarbe von 100% auf dem gedruckten Material auf dem Probedruck dargestellt wird durch Anwendung von Farbentfernung, um hierdurch auf dem Probedruck die darstellenden Charakteristiken der schwarzen Druckfarbe auf dem gedruckten Material wiederzugeben,

   **dadurch gekennzeichnet, dass**
   der Schritt des Korrigierens der Probedruck-Bilddaten die Schritte enthält:

   Finden von $\min(C_{100}, M_{100}, Y_{100})$ aus Farbwerten ($C_{100}$, $M_{100}$, $Y_{100}$, $Bk_{100}$) der Probedruck-Bilddaten zum Darstellen, auf dem Probedruck, des Teils mit dem Flächenfaktor für schwarze Druckfarbe von 100% auf dem gedruckten Material, um somit einen neuen Wert P von $Bk_{100}$ zu bestimmen;
   Finden eines Additionswerts $\alpha_{100}$ für $Bk_{100}$ gemäß der folgenden Gleichung:

$$\alpha_{100} = \min(C_{100}, M_{100}, Y_{100}) \times (P-Bk100) / \min(C_{100}, M_{100}, Y_{100}),$$

   worin $1 \leq P \leq 100$ ist;
   Addieren des Additionswertes $\alpha_{100}$ zu $Bk_{100}$ sowie Setzen jeweils von $C_{100}$, $M_{100}$ und $Y_{100}$ auf 0 ; und Wiederholen, mit Bezug auf n von 99 bis 1, der folgenden Schritte:
   Bestimmen von $\min(C_n, M_n, Y_n)$ aus Farbwerten ($C_n$, $M_n$, $Y_n$, $Bk_n$) der Probedruck-Bilddaten zum Darstellen, auf dem Probedruck, eines Teils mit einem Flächenfaktor für schwarze Druckfarbe von n% auf dem gedruckten Material;

Bestimmen eines Additionswerts $\alpha_n$ mit Bezug auf $Bk_n$ gemäß der folgenden Gleichung:

$$\alpha_n = (\min(C_n, M_n, Y_n) - (100-n)) \times (P - Bk_{100}) / \min(C_{100}, M_{100}, Y_{100}),$$

worin $1 \leq P \leq 100$ ist, um somit den Additionswert $\alpha_n$ zu $Bk_n$ zu addieren; und
Erhalten von jeweiligen Reduktionswerten $\beta_n$, $\gamma_n$ und $\delta_n$ von $C_n$, $M_n$, und $Y_n$ gemäß den folgenden Gleichungen:

$$\beta_n = \alpha_n \times ((P - Bk_{100}) / C_{100}),$$

$$\gamma_n = \alpha_n \times ((P - Bk_{100}) / M_{100}),$$

und

$$\delta_n = \alpha_n \times ((P - Bk_{100}) / Y_{100}),$$

worin $1 \leq P \leq 100$ ist; um hierdurch die Reduktionswerte $\beta_n$, $\gamma_n$ und $\delta_n$ jeweils von $C_n$, $M_n$ und $Y_n$ zu subtrahieren.

2. Farbprobedruckvorrichtung zum Verbessern der Farbreproduzierbarkeit von gedrucktem Material, das von einer Druckpresse zu erzeugen ist, bei einem durch eine Probedruckpresse durch die Verwendung eines Computers erzeugten Probedruck, welche Farbprobedruckvorrichtung aufweist:

einen Bilddaten-Eingabeabschnitt zum Empfangen eines Eingangs von Probedruck-Bilddaten über den gesamten Farbraum in einem subtraktiven Prozess, der sich durch Farbanpassung zwischen einem durch die Probedruckpresse erzeugten Probedruck und dem durch die Druckpresse erzeugten gedruckten Material ergibt; und
einen Bilddaten-Korrekturabschnitt zum Korrigieren der Probedruck-Bilddaten, in welchem jeder von Pegeln von monochromatischer Farbgradation von schwarz auf dem gedruckten Material auf dem Probedruck dargestellt ist, aus den in den Bilddaten-Eingabeabschnitt eingegebenen Bilddaten in einer solchen Weise, dass ein Teil mit einem Flächenfaktor für schwarze Druckfarbe von 100% auf dem gedruckten Material nur durch schwarze Druckfarbe auch auf dem Probedruck dargestellt ist, aber dass ein anderer Teil als der Teil mit einem Flächenfaktor für schwarze Druckfarbe von 100% auf dem gedruckten Material auf dem Probedruck dargestellt ist durch Anwendung von Farbentfernung, um hierdurch die korrigierten Bilddaten auszugeben,

**dadurch gekennzeichnet, dass**
der Bilddaten-Korrekturabschnitt enthält:

einen Bilddaten-Korrekturabschnitt für einen 100% schwarzen Teil zum Bestimmen von $\min(C_{100}, M_{100}, Y_{100})$ aus Farbwerten ($C_{100}$, $M_{100}$, $Y_{100}$, $Bk_{100}$) der Probedruck-Bilddaten zum Darstellen, auf dem Probedruck, des Teils mit dem Flächenfaktor für schwarze Druckfarbe von 100% auf dem gedruckten Material, um hierdurch einen neuen Wert P für $Bk_{100}$ zu bestimmten, Bestimmen eines Additionswerts $\alpha_{100}$ für $Bk_{100}$ gemäß der folgenden Gleichung:

$$\alpha_{100} = \min(C_{100}, M_{100}, Y_{100}) \times (P - Bk_{100}) / \min(C_{100}, M_{100}, Y_{100}),$$

worin $1 \leq P \leq 100$ ist, und dann Addieren des Additionswerts $\alpha_{100}$ zu $Bk_{100}$ sowie Setzen jeweils von $C_{100}$, $M_{100}$ und $Y_{100}$ auf 0 ; und
einen Bilddaten-Korrekturabschnitt für einen 99% oder weniger schwarzen Teil zum Wiederholen, mit Bezug auf n von 99 bis 1, der folgenden Prozesse:
Bestimmen von $\min(C_n, M_n, Y_n)$ aus Farbwerten ($C_n$, $M_n$, $Y_n$, $Bk_n$) der Probedruck-Bilddaten zum Darstellen, auf dem Probedruck, eines Teils mit einem Flächenfaktor für schwarze Druckfarbe von n% auf dem gedruckten Material;
Bestimmen eines Additionswerts $\alpha_n$ für $Bk_n$ gemäß der folgenden Gleichung:

$$\alpha_n = (\min(C_n, M_n, Y_n) - (100-n)) \times (P-Bk_{100}) / \min(C_{100}, M_{100}, Y_{100}),$$

worin $1 \leq P \leq 100$ ist, um hierdurch den Additionswert $\alpha_n$ zu $Bk_n$ zu addieren; und
Bestimmen jeweiliger Reduktionswerte $\beta_n$, $\gamma_n$ und $\delta_n$ von $C_n$, $M_n$ und $Y_n$ gemäß den folgenden Gleichungen:

$$\beta_n = \alpha_n \times ((P-Bk_{100}) / C_{100}),$$

$$\gamma_n = \alpha_n \times ((P-Bk_{100}) / M_{100}),$$

und

$$\delta_n = \alpha_n \times ((P-Bk_{100}) / Y_{100}),$$

worin $1 \leq P \leq 100$ ist, um hierdurch die Reduktionswerte $\beta_n$, $\gamma_n$ und $\delta_n$ jeweils von $C_n$, $M_n$ und $Y_n$ zu subtrahieren.

3. Aufzeichnungsmedium, in welchem das Farbprobedruckprogramm zum Verbessern der Farbreduzierbarkeit von durch eine Druckpresse zu erzeugendem gedrucktem Material in einem von einer Probedruckpresse erzeugten Probedruck durch die Verwendung eines Computers aufgezeichnet ist, welches Farbprobedruckprogramm weiterhin den Computer anweist, den Prozess auszuführen:

Korrigieren von Probedruck-Bilddaten, in denen jeder von Pegeln von monochromatischer Farbgradation von schwarz auf dem gedruckten Material auf dem Probedruck dargestellt ist, aus den Probedruck-Bilddaten über den gesamten Farbraum in einem subtraktiven Prozess, der sich aus der Farbanpassung zwischen dem Probedruck durch die Probedruckpresse und dem gedruckten Material mittels der Druckpresse in einer solchen Weise ergibt, dass ein Teil mit einem Flächenfaktor für schwarze Druckfarbe von 100% auf dem gedruckten Material auch auf dem Probedruck nur durch schwarze Druckfarbe dargestellt ist, aber dass ein Teil, der ein anderer als der Teil mit einem Flächenfaktor für schwarze Druckfarbe von 100% auf dem gedruckten Material ist, auf dem Probedruck durch Anwendung von Farbentfernung dargestellt ist, um hierdurch auf dem Probedruck die darstellenden Charakteristiken der schwarzen Druckfarbe auf dem gedruckten Material wiederzugeben,

**dadurch gekennzeichnet, dass**
der Probedruck-Bilddaten-Korrekturprozess die Prozesse enthält:

Bestimmen von $\min(C_{100}, M_{100}, Y_{100})$ aus Farbwerten $(C_{100}, M_{100}, Y_{100}, Bk_{100})$ der Probedruck-Bilddaten zur Darstellung, auf dem Probedruck, des Teils mit dem Flächenfaktor für schwarze Druckfarbe von 100% auf dem gedruckten Material, um hierdurch einen neuen Wert P für $Bk_{100}$ zu bestimmen; Bestimmen eines Additionswerts $\alpha_{100}$ für $Bk_{100}$ gemäß der folgenden Gleichung:

$$\alpha_{100} = \min(C_{100}, M_{100}, Y_{100}) \times (P-Bk_{100}) / \min(C_{100}, M_{100}, Y_{100}),$$

worin $1 \leq P \leq 100$;
Addieren des Additionswerts $\alpha_{100}$ zu $Bk_{100}$ sowie Setzen jeweils von $C_{100}$, $M_{100}$ und $Y_{100}$ auf 0; und Wiederholen, mit Bezug auf n von 99 bis 1, der folgenden Prozesse:

Bestimmen von $\min(C_n, M_n, Y_n)$ aus Farbwerten $(C_n, M_n, Y_n, Bk_n)$ der Probedruck-Bilddaten zur Darstellung, auf dem Probedruck, eines Teils mit einem Flächenfaktor für schwarze Druckfarbe von n% auf dem gedruckten Material;

Bestimmen eines Additionswertes $\alpha_n$ für $Bk_n$ gemäß der folgenden Gleichung:

$$\alpha_n = (\min(C_n, M_n, Y_n) - (100-n)) \times (P - Bk_{100}) / \min(C_{100}, M_{100}, Y_{100}),$$

worin $1 \leq P \leq 100$ ist, um hierdurch den Additionswert $\alpha_n$ zu $Bk_n$ zu addieren; und
Bestimmen jeweiliger Reduktionswerte $\beta_n$, $\gamma_n$ ünd $\delta_n$ für $C_n$, $M_n$ und $Y_n$ gemäß den folgenden Gleichungen:

$$\beta_n = \alpha_n \times ((P - Bk_{100}) / C_{100}),$$

$$\gamma_n = \alpha_n \times ((P - Bk_{100}) / M_{100}),$$

und

$$\delta_n = \alpha_n \times ((P - Bk_{100}) / Y_{100}),$$

worin $1 \leq P \leq 100$ ist, um hierdurch die Reduktionswerte $\beta_n$, $\gamma_n$ und $\delta_n$ jeweils von $C_n$, $M_n$ und $Y_n$ zu subtrahieren.

**Revendications**

1. Procédé de tirage d'épreuve couleur pour améliorer la reproductibilité des couleurs d'un matériau imprimé destiné à être produit par une presse d'impression lors d'une impression d'épreuve produite par une presse d'épreuve, le procédé de tirage d'épreuve couleur comprenant l'étape de :

   correction de données d'image d'impression d'épreuve, où chacun de niveaux de gradation de couleur monochrome de noir sur le matériau imprimé est représenté sur l'impression d'épreuve, parmi les données d'image d'impression d'épreuve sur la totalité de l'espace couleur selon un processus soustractif résultant d'une adaptation des couleurs entre une impression d'épreuve produite par la presse d'épreuve et le matériau imprimé destiné à être produit par la presse d'impression de telle sorte qu'une partie présentant un facteur d'aire d'encre noire de 100% sur le matériau imprimé soit représentée seulement à l'aide d'encre noire également sur l'impression d'épreuve mais qu'une partie autre que la partie présentant un facteur d'aire d'encre noire de 100% sur le matériau imprimé soit représentée sur l'impression d'épreuve en utilisant une élimination des souscouleurs, afin d'ainsi reproduire, sur l'impression d'épreuve, les caractéristiques de représentation de l'encre noire sur le matériau imprimé,
   **caractérisé en ce que** :

   l'étape de correction des données d'image d'impression d'épreuve inclut les étapes de :

   recherche de $\min(C_{100}, M_{100}, Y_{100})$ à partir de valeurs de couleur $(C_{100}, M_{100}, Y_{100}, Bk_{100})$ des données d'image d'impression d'épreuve pour représenter, sur l'impression d'épreuve, la partie présentant le facteur d'aire d'encre noire de 100% sur le matériau imprimé, afin d'ainsi déterminer une nouvelle valeur P de $Bk_{100}$ ;
   recherche d'une valeur d'addition $\alpha_{100}$ pour $Bk_{100}$ conformément à l'équation qui suit :

$$\alpha_{100} = \min(C_{100}, M_{100}, Y_{100}) \times (P - Bk_{100}) / \min(C_{100}, M_{100}, Y_{100}),$$

   dans laquelle $1 \leq P \leq 100$ ;
   addition de la valeur d'addition $\alpha_{100}$ à $Bk_{100}$ de même qu'établissement de l'ensemble de $C_{100}$, $M_{100}$ et $Y_{100}$ à 0 ; et
   répétition, en relation avec n qui va de 99 à 1, des étapes qui suivent de :

détermination de $\min(C_n, M_n, Y_n)$ à partir de valeurs de couleur $(C_n, M_n, Y_n, Bk_n)$ des données d'image d'impression d'épreuve pour représenter, sur l'impression d'épreuve, une partie présentant un facteur d'aire d'encre noire de n% sur le matériau imprimé ;

détermination d'une valeur d'addition $\alpha_n$ en relation avec $Bk_n$ conformément à l'équation qui suit :

$$\alpha_n = (\min(C_n, M_n, Y_n) - (100 - n)) \times (P - Bk_{100})/\min(C_{100}, M_{100}, Y_{100}),$$

dans laquelle $1 \leq P \leq 100$, afin d'ainsi ajouter la valeur d'addition $\alpha_n$ à $Bk_n$ ; et

obtention de valeurs de réduction respectives $\beta_n$, $\gamma_n$ et $\delta_n$ de $C_n$, $M_n$ et $Y_n$ conformément aux équations qui suivent :

$$\beta_n = \alpha_n \times ((P - Bk_{100})/C_{100}),$$

$$\gamma_n = \alpha_n \times ((P - Bk_{100})/M_{100})$$

et

$$\delta_n = \alpha_n \times ((P - Bk_{100})/Y_{100}),$$

dans lesquelles $1 \leq P \leq 100$, afin d'ainsi soustraire respectivement les valeurs de réduction $\beta_n$, $\gamma_n$ et $\delta_n$ de $C_n$, $M_n$ et $Y_n$.

**2.** Appareil de tirage d'épreuve couleur pour améliorer la reproductibilité des couleurs d'un matériau imprimé destiné à être produit par une presse d'impression lors d'une impression d'épreuve produite par une presse d'épreuve en utilisant un ordinateur, l'appareil de tirage d'épreuve couleur comprenant :

une section d'entrée de données d'image pour recevoir une entrée de données d'image d'impression d'épreuve sur la totalité de l'espace de couleur selon un processus soustractif résultant d'une adaptation des couleurs entre une impression d'épreuve produite par la presse d'épreuve et le matériau imprimé produit par la presse d'impression ; et

une section de correction de données d'image pour corriger les données d'image d'impression d'épreuve, où chacun de niveaux de gradation de couleur monochrome de noir sur le matériau imprimé est représenté sur l'impression d'épreuve, parmi les données d'image entrées sur la section d'entrée de données d'image de telle sorte qu'une partie présentant un facteur d'aire d'encre noire de 100% sur le matériau imprimé soit représentée seulement à l'aide d'encre noire également sur l'impression d'épreuve mais qu'une partie autre que la partie présentant un facteur d'aire d'encre noire de 100% sur le matériau imprimé soit représentée sur l'impression d'épreuve en utilisant une élimination des sous-couleurs, afin d'ainsi émettre en sortie les données d'image corrigées,

**caractérisé en ce que** la section de correction de données d'image inclut :

une section de correction de données d'image de partie de noir de 100% pour déterminer $\min(C_{100}, M_{100}, Y_{100})$ à partir de valeurs de couleur $(C_{100}, M_{100}, Y_{100}, Bk_{100})$ des données d'image d'impression d'épreuve pour représenter, sur l'impression d'épreuve, la partie présentant le facteur d'aire d'encre noire de 100% sur le matériau imprimé, afin d'ainsi déterminer une nouvelle valeur P de $Bk_{100}$, pour déterminer une valeur d'addition $\alpha_{100}$ pour $Bk_{100}$ conformément à l'équation qui suit :

$$\alpha_{100} = \min(C_{100}, M_{100}, Y_{100}) \times (P - Bk_{100})/\min(C_{100}, M_{100}, Y_{100}),$$

dans laquelle $1 \leq P \leq 100$, puis pour additionner la valeur d'addition $\alpha_{100}$ à $Bk_{100}$ de même que pour établir l'ensemble de $C_{100}$, $M_{100}$ et $Y_{100}$ à 0 ; et

une section de correction de données d'image de partie de noir de 99% ou moins pour répéter, en relation avec n qui va de 99 à 1, les processus qui suivent de :

détermination de $\min(C_n, M_n, Y_n)$ à partir de valeurs de couleur $(C_n, M_n, Y_n, Bk_n)$ des données d'image d'impression d'épreuve pour représenter, sur l'impression d'épreuve, une partie présentant un facteur d'aire d'encre noire de n% sur le matériau imprimé ;
détermination d'une valeur d'addition $\alpha_n$ pour $Bk_n$ conformément à l'équation qui suit :

$$\alpha_n = (\min(C_n, M_n, Y_n) - (100 - n)) \times (P - Bk_{100})/\min(C_{100}, M_{100}, Y_{100}),$$

dans laquelle $1 \leq P \leq 100$, afin d'ainsi ajouter la valeur d'addition $\alpha_n$ à $Bk_n$ ; et
détermination de valeurs de réduction respectives $\beta_n$, $\gamma_n$ et $\delta_n$ de $C_n$, $M_n$ et $Y_n$ conformément aux équations qui suivent :

$$\beta_n = \alpha_n \times ((P - Bk_{100})/C_{100}),$$

$$\gamma_n = \alpha_n \times ((P - Bk_{100})/M_{100})$$

et

$$\delta_n = \alpha_n \times ((P - Bk_{100})/Y_{100}),$$

dans lesquelles $1 \leq P \leq 100$, afin d'ainsi soustraire respectivement les valeurs de réduction $\beta_n$, $\gamma_n$ et $\delta_n$ de $C_n$, $M_n$ et $Y_n$.

3. Support d'enregistrement comportant enregistré dessus le programme de tirage d'épreuve couleur pour améliorer la reproductibilité des couleurs d'un matériau imprimé destiné à être produit par une presse d'impression lors d'une impression d'épreuve produite par une presse d'épreuve en utilisant un ordinateur, le programme de tirage d'épreuve couleur demandant en outre en instruction à l'ordinateur d'exécuter le processus de :

correction de données d'image d'impression d'épreuve, où chacun de niveaux de gradation de couleur monochrome de noir sur le matériau imprimé est représenté sur l'impression d'épreuve, parmi les données d'image d'impression d'épreuve sur la totalité de l'espace couleur selon un processus soustractif résultant d'une adaptation des couleurs entre une impression d'épreuve par la presse d'épreuve et le matériau imprimé au moyen de la presse d'impression de telle sorte qu'une partie présentant un facteur d'aire d'encre noire de 100% sur le matériau imprimé soit représentée seulement à l'aide d'encre noire également sur l'impression d'épreuve mais qu'une partie autre que la partie présentant un facteur d'aire d'encre noire de 100% sur le matériau imprimé soit représentée sur l'impression d'épreuve en utilisant une élimination des sous-couleurs, afin d'ainsi reproduire, sur l'impression d'épreuve, les caractéristiques de représentation de l'encre noire sur le matériau imprimé,

**caractérisé en ce que** :

le processus de correction de données d'image d'impression d'épreuve inclut les processus de :

détermination de $\min(C_{100}, M_{100}, Y_{100})$ à partir de valeurs de couleur $(C_{100}, M_{100}, Y_{100}, Bk_{100})$ des données d'image d'impression d'épreuve pour représenter, sur l'impression d'épreuve, la partie présentant le facteur d'aire d'encre noire de 100% sur le matériau imprimé, afin d'ainsi déterminer une nouvelle valeur P de $Bk_{100}$ ;
détermination d'une valeur d'addition $\alpha_{100}$ pour $Bk_{100}$ conformément à l'équation qui suit :

$$\alpha_{100} = \min(C_{100}, M_{100}, Y_{100}) \times (P - Bk_{100})/\min(C_{100}, M_{100}, Y_{100}),$$

dans laquelle $1 \leq P \leq 100$ ;

addition de la valeur d'addition $\alpha_{100}$ à $Bk_{100}$ de même qu'établissement de l'ensemble de $C_{100}$, $M_{100}$ et $Y_{100}$ à 0 ; et répétition, en relation avec n qui va de 99 à 1, des processus qui suivent de :

détermination de $min(C_n, M_n, Y_n)$ à partir de valeurs de couleur $(C_n, M_n, Y_n, Bk_n)$ des données d'image d'impression d'épreuve pour représenter, sur l'impression d'épreuve, une partie présentant un facteur d'aire d'encre noire de n% sur le matériau imprimé ;
détermination d'une valeur d'addition $\alpha_n$ pour $Bk_n$ conformément à l'équation qui suit :

$$\alpha_n = (min(C_n, M_n, Y_n) - (100 - n)) \times (P - Bk_{100})/min(C_{100}, M_{100}, Y_{100}),$$

dans laquelle $1 \leq P \leq 100$, afin d'ainsi ajouter la valeur d'addition $\alpha_n$ à $Bk_n$ ; et
détermination de valeurs de réduction respectives $\beta_n$, $\gamma_n$ et $\delta_n$ de $C_n$, $M_n$ et $Y_n$ conformément aux équations qui suivent :

$$\beta_n = \alpha_n \times ((P - Bk_{100})/C_{100},$$

$$\gamma_n = \alpha_n \times ((P - Bk_{100})/M_{100}$$

et

$$\delta_n = \alpha_n \times ((P - Bk_{100})/Y_{100},$$

dans lesquelles $1 \leq P \leq 100$, afin d'ainsi soustraire respectivement les valeurs de réduction $\beta_n$, $\gamma_n$ et $\delta_n$ de $C_n$, $M_n$ et $Y_n$.

# Fig. 1

EXTRACT DATA, IN WHICH EACH OF LEVELS OF MONOCHROMATIC COLOR GRADATION OF BLACK ON PRINTED MATTER IS REPRESENTED ON PROOF PRINT, OUT OF PROOF PRINTING IMAGE DATA RESULTING FROM COLOR MATCHING — 20

DETERMINE $\min(C_{100}, M_{100}, Y_{100})$ FROM COLOR VALUES $(C_{100}, M_{100}, Y_{100}, BK_{100})$ OF DATA REPRESENTING, ON PROOF PRINT, PART HAVING BLACK INK AREA FACTOR OF 100% ON PRINTED MATTER — 21

DETERMINE NEW VALUE P OF $BK_{100}$ — 22

DETERMINE ADDITION VALUE $\alpha_{100}$ FOR $BK_{100}$ IN ACCORDANCE WITH:
$$\alpha_{100} = \frac{\min(C_{100}, M_{100}, Y_{100}) \times (P-Bk_{100})}{\min(C_{100}, M_{100}, Y_{100})}$$
— 23

ADD $\alpha_{100}$ TO $BK_{100}$ AS WELL AS SET $C_{100} = M_{100} = Y_{100} = 0$ — 24

$n = 99$ — 25

$n = 0$ ? — 26

YES

NO

DETERMINE $\min(C_n, M_n, Y_n)$ FROM COLOR VALUES $(C_n, M_n, Y_n, BK_n)$ OF DATA REPRESENTING, ON PROOF PRINT, PART HAVING BLACK INK AREA FACTOR OF n% ON PRINTED MATTER — 27

DETERMINE ADDITION VALUE $\alpha_n$ FOR $BK_n$ IN ACCORDANCE WITH:
$$\alpha_n = \frac{(\min(C_n, M_n, Y_n) - (100-n)) \times (P-Bk_n)}{\min(C_n, M_n, Y_n)}$$
TO THUS ADD IT TO $BK_n$ — 28

DETERMINE RESPECTIVE REDUCTION VALUES $\beta_n$, $\gamma_n$ AND $\delta_n$ FOR $C_n, M_n$ AND $Y_n$ IN ACCORDANCE WITH:
$$\beta_n = \alpha_n \times \frac{P-Bk_{100}}{C_{100}} \quad , \quad \gamma_n = \alpha_n \times \frac{P-Bk_{100}}{M_{100}} \quad ,$$
$$\delta_n = \alpha_n \times \frac{P-Bk_{100}}{Y_{100}}$$
TO THUS SUBTRACT THEM FROM $C_n, M_n$ AND $Y_n$, RESPECTIVELY — 29

$n = n - 1$ — 30

CREATE PROOF PRINT BY USING CORRECTED IMAGE DATA REPRESENTING, ON PROOF PRINT, EACH OF LEVELS OF MONOCHROMATIC COLOR GRADATION OF BLACK ON PRINTED MATTER AND OTHER NOT-CORRECTED IMAGE DATA — 31

18

# Fig. 2

```
                              5 0
                    ┌──────────────────┐
                    │ IMAGE DATA       │
                    │ INPUT SECTION    │
                    └──────────────────┘
                                        5 1
          ┌─────────────────────────────────┐
          │  ┌───────────────────────────┐   │
          │  │ 100% BLACK PART IMAGE     │───┼── 5 2
          │  │ DATA CORRECTING SECTION   │   │
          │  └───────────────────────────┘   │
          │                                  │
          │  ┌───────────────────────────┐   │
          │  │ 99% OR LESS BLACK PART    │   │
          │  │ IMAGE DATA CORRECTING     │───┼── 5 3
          │  │ SECTION                   │   │
          │  └───────────────────────────┘   │
          └─────────────────────────────────┘
                          │
                          ↓
              TO COLOR PRINTING PRESS
```

## Fig. 3

## Fig. 4

# Fig. 5

PRINTED MATTER

PROOF PRINT

C, M, Y, K

C, M, Y, K

SPACE CONVERSION

SPACE CONVERSION

COMPARISON

L a b

L a b

COLOR REPRODUCING
REGIONS APPROXIMATED
TO EACH OTHER

Gamut Mapping

L'a'b'

SPACE CONVERSION

APPROXIMATED COLOR
REPRODUCIBILITY

C', M', Y', K'

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10294876 B
- JP 07107312 B